# EUROPEAN PATENT APPLICATION

(11) **EP 1 059 599 A2**
(43) Date of publication of application: **13.12.2000**
(21) Application number: 00660106.6
(22) Date of filing: 06.06.2000
(51) Int. Cl.: G06F 17/60

(54) **Method and apparatus for retrieving specific information associated with an obtained indentifier**

(30) Priority: 08.06.1999 US 328138
(71) Applicant: Nokia Corporation, 02150 Espoo (FI)
(72) Inventor: Santamäki, Harry, 00180 Helsinki (FI); Heinonen, Pekka J., 02100 Espoo (FI); Lehikoinen, Juha, 33340 Tampere (FI); Hellman, Esko, 02660 Espoo (FI)
(74) Representative: Johansson, Folke Anders

(57) **Abstract**

A method and apparatus for retrieving product specific information to facilitate a user's decision making, such as a buying decision, is disclosed. The present invention also allows a database to be built that includes users' comments regarding their behaviour and/or experiences with particular products. This database then may be accessed and queried using a mobile phone.

## Description

This invention relates in general to wireless electronic commerce, and more particularly to a method and apparatus for retrieving specific information associated with a obtained object identifier.

All Internet users agree that the usage of the Internet is growing on a worldwide basis. In fact, few would disagree with the view that the consolidation of worldwide networks is destined to continue. Furthermore, price reductions in telecommunications bandwidth and processing devices are continuing to incite an explosion of Internet usage. Increasingly, electronic commerce is being used by consumers as a means of saving time and locating minimally priced products.

Electronic commerce is typically thought of as the applications and processes that link enterprises, consumers and communities through the electronic exchange of goods, services, transactions and information. The Internet has thus become a valuable tool for transacting business. New uses of the Internet as an electronic commerce delivery vehicle include one-to-one marketing, personalized on-line catalogs, and automatic order entry capture systems which are integrated with back end inventory management and supply chains.

One aspect of electronic commerce which is becoming very popular is online product auctioning. Online auctioning is a growing new industry that combines the traditional institution of auctioning with the conveniences of online interaction. It expands the parameters of regular auctioning with respect to time, distance, convenience, scale and scope. Thus, online auctioning brings together the synergy of capitalism and the Internet to provide frictionless commerce. Nevertheless, as with all auctions, the frenzied pace of an auction combined with the excitement of bidding often leads to sales that are at or above retail.

Often better bargains are obtain merely by surfing on the Internet and shopping around. Nevertheless, as with all online purchases, quality is an unknown factor. Thus, to minimize the risk of receiving inferior products, the consumer must shop with well-known retailers. Nevertheless, online shopping doesn't allow a personal inspection of the product being considered. In addition to personally inspecting products, a user wishes to know before buying and before making a decision to buy, what experiences the other users who have earlier bought a similar product have had.

Thus, prior shopping methods have inherent deficiencies. More specifically, in the online browsing method, a merchant maintains a computer databases of digital advertisements accessed by buyer computers. A buyer can retrieve and display advertisements in the merchant's network. However, the drawback to this method is that the merchant can influence and control the content of information on the Internet.

A second method involves using a valid authorization or valid account, which can control access to the server. By providing telephone numbers, a translation database can be used to access a hypertext page. Thirdly, an award program on the Internet may be provided to the user. The user can then browse catalogs for shopping purposes after accessing the award program. The program calculates award points etc. Again in these examples, the merchant can manipulate the content of the information.

At the same time that electronic commerce is expanding, wireless mobile communication usage is exploding with over 100 million people using a mobile service by the end of 1995 alone. Further, that number is expected to continue its increase. Several factors are contributing to the exciting growth in the telecommunications industry. For example, a combination of technology and competition bring more value to consumers. Phones are smaller, lighter, have a longer battery life, and are affordable now for the mass market. Operators are providing excellent voice quality, innovative services, and roaming across the country or world. Most important, mobility is becoming less expensive for people to use. Around the world, as well as in the United States, governments are licensing additional spectrum for new operators to compete with traditional cellular operators. Competition brings innovation, new services, and lower prices for consumers.

For cellular telephony to continue its spectacular growth, it must handle more subscribers per base station and/or higher-bandwidth services. Toward that end, the industry's post-second technology generation (e.g., 3G, 4G) is envisioned as a move to information communicators that will pass images and data more efficiently.

Still further, the online shopping methods described above involve users that are usually at home or offices. Accordingly, the Internet is used for purchasing and paying purposes in a fixed networks. Consumer independent information content is not provided. Further, mobility is not fostered since a computer of some type is required. Further, until now, the Internet has not driven a lot of extra demand for databases. But as electronic commerce expands so will the need for sophisticated databases.

According to the present invention there has been seen a need for a method and apparatus for retrieving specific information associated with a obtained object identifier. Further according to the present invention there has been seen a method and apparatus for facilitating consumer quality and price comparisons with mobility based on earlier users' behaviour and/or experiences. Further the present invention includes seing a need for a method and apparatus for connecting and retrieving product specific information using a mobile phone to facilitate a users' decision making.

The present invention thus provides a database that includes users' comments regarding their behaviour and/or experiences with particular products which may be accessed and queried using a mobile phone.

According to a first aspect of the invention there is provided a method for retrieving product specific information in order to facilitate a user's decision making, comprising establishing a database comprising product specific information; providing a product identity system into the database for allowing a user to locate information in the database associated with product identification data; and accessing the database using the product identity system to obtain product information in the database associated with the product identification data.

Other embodiments of a method in accordance with the principles of the invention may include alternative or optional additional aspects. One such aspect of the present invention is that product information further comprises earlier buyer's experiences with at least one product, and that the accessing further comprises accessing the database of the product information to obtain earlier buyer's experiences with a product.

According to a second aspect of the invention there is provided a mobile phone, comprising: a product identity ascertainment module for obtaining a product identifier from a product of interest by a user; and a controller, coupled to the product identity ascertainment module, for processing the product identifier and providing call functions to route the product identifier to a server for obtaining earlier users' experiences regarding the product of interest.

According to a third aspect of the invention there is provided a consumer product review system, comprising: a database comprising information on earlier users' behaviour and/or experiences with a plurality of products; a mobile phone for identifying a product of interest and for generating a product service request; and a server for receiving the product service request and for accessing the database to process the product service request.

Other embodiments of a method in accordance with the principles of the invention may include alternative or optional additional aspects. One such aspect of the present invention is that the obtaining of product specific data further includes transmitting the product identification data at the mobile phone.

The product identification data may be obtained using a device such as a bar code reader, a Bluetooth transmitter, a SMS transmitter, or any other suitable means for communicating with the mobile phone. The user may then access a communications network. The user may access the service provider by dialing a service provider number or by accessing a web page of the service provider via the Internet.

The communications network includes an access node such as may be provided by a cellular operator. The access node provides a link to a server for processing requests or commands from the mobile phone. The server in turns communicates with a service provider. The service provider includes a database that includes information associated with the product identified by the product identification data. The server may search the database for data associated with the product identification data. The server also may filter retrieved data, such as products and multimedia titles, according to personal filter parameters provided via message. The server provides to the mobile phone data retrieved from the database. The data may also include the state of a personal database. Further the message may be a SMS message, a GPRS message, a voice message, a fax message or an email message.

The database may collect information from the users. In addition, or alternatively, the database may be provided with pre-existing information associated with the product identified by the product identification data. The server provides access to the database and may be a SMS server or a WAP server, and therefore may be accessed via any communications network, e.g., the Internet, a wireless communications systems, or the public switched telephone network or a combination thereof.

The product service request may include the product identification data and, optionally, a personal indicator. Moreover, the identifier may include a product price and/or product information.

These and various other advantages and features of the invention are pointed out with particularity in the claims annexed hereto and form a part hereof. However, for a better understanding of the invention, its advantages, and the objects obtained by its use, reference should be made to the drawings which form a further part hereof, and to accompanying descriptive matter, in which there are illustrated and described specific examples of an apparatus in accordance with the invention.

Referring now to the drawings in which like reference numbers represent corresponding parts throughout:
Fig. 1 illustrates one possible embodiment of an advanced communication network;
Fig. 2 illustrates a block diagram of a mobile phone according to the present invention;
Fig. 3 illustrates a system and method for retrieving specific information associated with a obtained object identifier according to the present invention;
Fig. 4 illustrates a block diagram highlighting the access types for facilitating admission to the database according to the present invention;
Fig. 5 illustrates a block diagram of a Bluetooth transceiver for use with a mobile phone according to the present invention;
Fig. 6 illustrates one example of the database structure; and
Fig. 7 illustrates one example of user contribution fields according to the present invention.

In the following description of the exemplary embodiment, reference is made to the accompanying drawings which form a part hereof, and in which is shown by way of illustration the specific embodiment in which the invention may be practiced. It is to be understood that other embodiments may be utilized as structural changes may be made without departing from the scope of the present invention.

The present invention provides a method and apparatus for retrieving specific information associated with a obtained object identifier. The present invention provides a database that includes data associated with objects. The data base may be accessed and queried using a mobile phone. An identifier of an object is obtained using the mobile phone and the database provides information associated with the obtained object identifier.

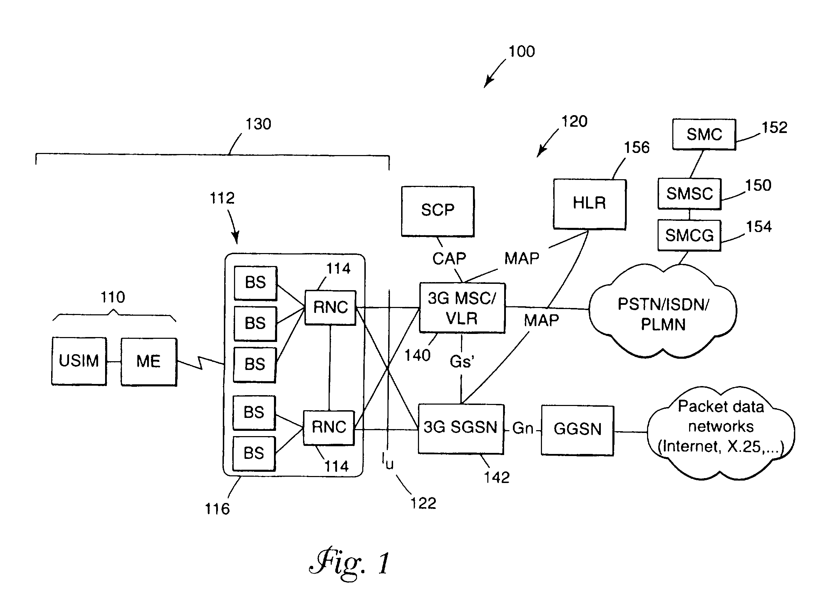

Fig. 1 illustrates one possible embodiment of an advanced communication network 100, e.g., a post-second generation GSM evolution. Those skilled in the art will recognize that the present invention is not meant to be limited to use with GSM mobile communication systems, but is applicable to other communication systems.

As shown in Fig. 1, the implementations of Generic Radio Access Network (GRAN) may be based on the integration of RAN and GSM/UMTS core network which has evolved from the GSM core network by integrating new post-second generation capabilities. For convenience, the evolved GSM network elements will be referred to as 3G MSC and 3G SGSN. However, those skilled in the art will readily understand that the present invention is not meant to be limited to use with any particular wireless system.

A mobile unit 110 receives and sends signals to a base station (BS) 112. Base stations 112 are in turn coupled to a radio network controller (RNC) 114 in the radio access network (RAN) 116. The RAN interfaces with GSM/UMTS core network 120 via the lu-interface 122, which corresponds to the GSM A-interface and General Packet Radio Service (GPRS) Gb-interface. As can be seen, radio access 130 is isolated from the core network 120, and the goal is that the GSM/UMTS core network would have the flexibility to support any radio access scheme. Circuit switched services are routed via the GSM MSC 140, and the packet switched services via the GPRS part 142 of the GSM/UMTS core network.

A Short Message Service (SMS) may be included in the mobile phone network. A short message service center (SMSC) 150 is responsible for the relaying and store-and-forwarding of a short message between a short message center (SMC) 152 and a mobile station 110. The SMS gateway SMSG 154 is an MSC capable of receiving a short message from an SMSC 150, interrogating a home location register (HLR) 156 for routing information, and delivering the short message to the "visited" MSC 140 of the recipient mobile station 110. The SMS gateway 154 is an MSC capable of receiving a short message from the mobile network and submitting it to the appropriate SMSC. The SMSG 154 is typically integrated with the SMSC.

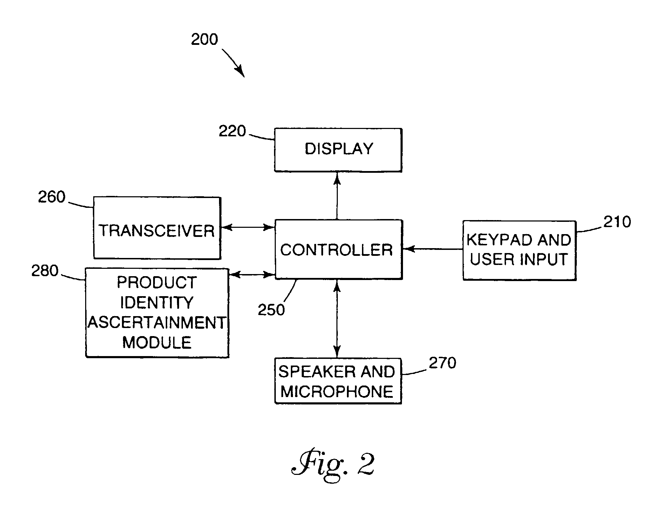

Fig. 2 illustrates a block diagram of a mobile phone 200 according to the present invention. The mobile phone includes a keypad 210 for dialing, for controlling menu operation and for entering phone control functions. The mobile phone also includes a display 220. The display 220 may be used to show keypad entries, such as a number to be dialed, number lookup commands, phone setup commands, etc. In addition, the display 220 may be used to display other information, such as user control menus, a Short Messaging Service menu, clocks, video, games, etc. A controller 250 is provided for processing the user inputs, controlling the display 220 and providing call functions. The mobile phone 200 also includes a transceiver 260, for accessing a communication network under the control of the controller. The transceiver allows the mobile phone 200 to transmit and receive SMS messages, GPRS messages, voice messages and email messages.

A speaker and microphone 270 are used to provide signals which are then processed by the controller 250. In addition, the mobile phone 200 includes a module 280 for ascertaining the identity of the product. For example, the module 280 may be a low power RF (LPRF) transmitter such as a Bluetooth transceiver, a bar code reader, a network interface, an infrared transceiver, an Optical Character Recognition device, an European Article Number reading device, Short Messaging Service functionality or a Voice Recognition System.

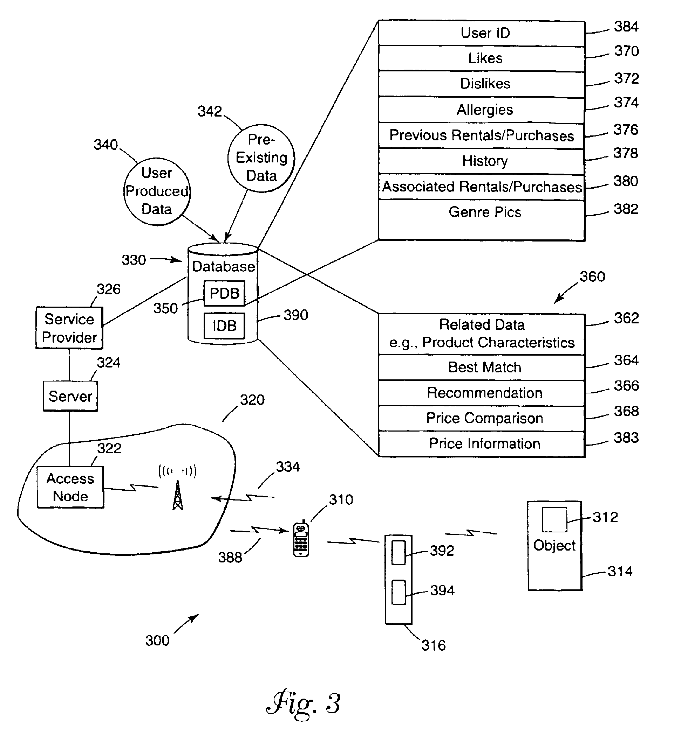

Fig. 3 illustrates one embodiment 300 of the present invention wherein users connect and retrieve specific information associated with an object according to the present invention. Users, represented by mobile phone 310, obtain an identifier 312 associated with an object 314. The identifier 312 may be obtain, for example, using a device 316 such as a bar code reader, a Bluetooth transmitter, a SMS transmitter, or any other suitable means for communicating with the mobile phone 310. The user may then access a communications network 320. The user 316 may access the service provider 326 by dialing a service provider number or by accessing a web page of the service provider via the Internet.

The communications network 320 includes an access node 322 such as may be provided by a cellular operator. The access node 322 provides a link to a server 324 for processing requests or commands from the mobile phone 310. The server 324 in turns communicates with a service provider 326. The service provider includes a database 330 that includes information associated with the object 314 identified by the object identifier 312. The server 324 may search the database 330 for data associated with the object identifier 312 obtain via a device 316 such as a bar code reader, Bluetooth module, or other means which will be described in more detail below. Moreover, a scanning device 316 such as a bar code reader may communicate with the mobile phone 310 via Bluetooth, SMS, infrared, etc. The server 324 also may filter retrieved data, such as products and multimedia titles, according to personal filter parameters provided via message 334. The server 324 then provides to the mobile phone 316 data 388 retrieved from the database 330. The data 388 may also include the state of a personal database 350 as will be described in more detail below. Further the message 388 may be a SMS message, a GPRS message, a voice message, a fax message or an email message.

The database 330 may collect information 340 from the users 310. In addition, or alternatively, the database 330 may be provided with pre-existing information 342 associated with the object 314 identified by the object identifier 312. For example, a user 310 may have purchased products 314 earlier. These user 310 may send their experience information concerning a product 314 to the database 330. Thus, the service provider 326 may construct a database 330 regarding the experiences of the earlier buyers and associates their comments with an appropriate product identifier 312. Those skilled in the art will recognize that a pre-existing database 342 may also be used by the service provider 326, such as may be provide by vendors, customers, consumer organizations or research institutes.

The server 324 provides access to the database 330 and may be a SMS server or a WAP server, and therefore may be accessed via any communications network 320, e.g., the Internet, a wireless communications systems, or the public switched telephone network or a combination thereof. However, those skilled in the art will recognize that the invention is not meant to be limited to any particular access network.

For example, a user 310 may shop around until interest in a particular product 314 is peaked, e.g., a microwave oven. The user 310 may then obtain information via device 316 identifying this object 314, e.g., using a bar code reader or Bluetooth module. The mobile phone 310 then connects to a communications network 320 to obtain information associated with the object identifier 312 via an object request command 334. The object request command 334 may include the object identifier 312 and, optionally, a personal indicator 384. Moreover, the identifier 312 may include a product price and/or product information.

In this scenario, the object request command 334 is a request to access the server 324 coupled to the database 330 through the service provider 326. The database 330 includes data 360 associated with the object. Then, information 360 associated with this object provided by the database 330 is provided to the mobile phone 310, e.g. display or headphone or both. Accordingly, the user 310 may thereupon make a decision based on the information provided by the database 330, e.g., the user may decide to purchase a product based upon the experiences of earlier buyers 340 that was stored in the database 330.

Those skilled in the art will recognize that the present invention is not meant to be limited to any particular order of obtaining the object information and connecting to the communications network. For example, those skilled in the art will recognize that the user 310 may obtain an object identifier 312 first and then access the database 330 via a communications network 320 or the user 310 may access the communications network 320 first and then obtain an object identifier 312.

Further, the user 310 may obtain identifiers 312 associated with multiple objects of interest 314. For example, the user 310 may identify several competing products or simply several non-related products that the user is interested in and then access the database 330 through a communications network 320 to obtain information 360 pertaining to each product of interest 314. Further, the database 330 may also include information associated with related objects 362 so that a best match 364 or a recommendation 366 based upon a price comparison may be provided to the user 310 (i.e., buy, don't buy). In fact, a price comparison list 368 or price information 383 may be provided to the user 310. Information in the database 330 is linked and sorted according to the identifier 312, and optionally, the personal indicator 384.

Those skilled in the art will also recognize that the mobile phone 310 may comprise a WAP (Wireless Application Protocol) system. Thus, the mobile phone 310 may access the server 324 via the Internet, Short Message Service, GPRS, voice, fax, etc.

As described above, the database 330 includes information 360 associated with an object 314 identified by an obtained identifier 312. Thus, the database 330 may constructed to include a personal database 350 for each user. A personal data base 350 may include positive personal preferences such as personal likes 370, negative personal preferences such as dislikes 372, allergy information 374, multimedia rental information 376, etc. For example, the personal database 350 may include a list of previous rentals of multimedia titles, such as video cassettes, DVDs, audio books, software titles, music CDs, etc. that the user has rented or purchased. From such a database 350, a user history 378 may be downloaded. Also, other users may also have a personal database from which recommendations 380 may be provided based upon an identifier 312 representing, for example, a particular movie title. Further, recommendations may be made for multimedia in the same genre 382, such as mysteries, dramas, science fictions, etc. Additionally, a service provider 326 may provide incentives 390 to users 310 to provide a rating for rentals. In such a scenario, the user 310 obtains an identifier 312 associated with an object 314 and then enters a rating that is transferred to the database 330. Each user 310 may be provide with an unique user indicator 384 to access their personal database 350 and to cross-reference information associated with them. The bar code reader 316 may include at least a bar code scanner 392 and a Bluetooth transceiver 394.

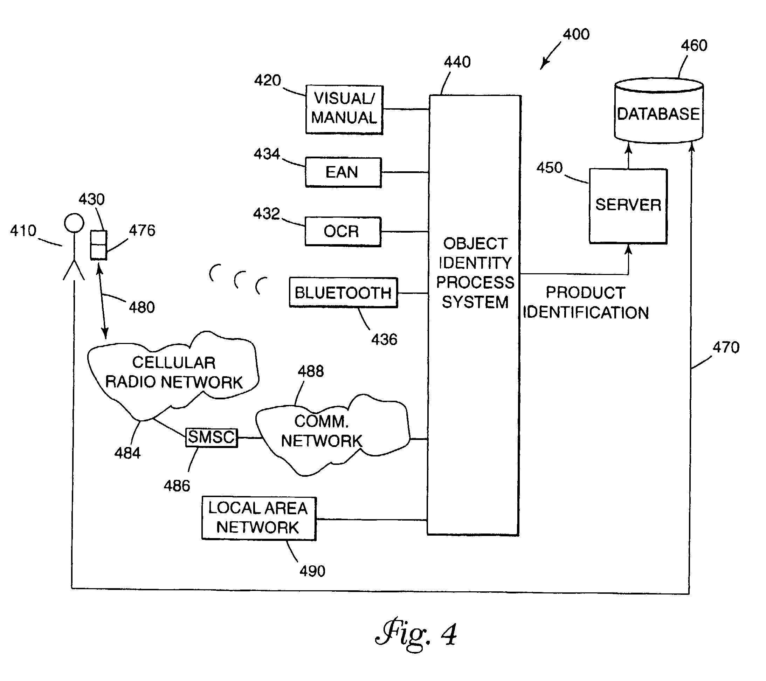

Fig. 4 illustrates a block diagram 400 highlighting examples of the access types that may be used for admission to the database according to the present invention. Those skilled in the art will recognize that the present invention is not meant to be limited to these access technologies, but that these access technologies are present herein only for illustration.

The user 410 may gain access to the object identity process system 440 according to various access technologies. In Fig. 4, the user 410 may use visual/manual techniques 420 to access the object identity process system 440. Also, the user 410 may use a mobile phone 430 to read the identifying information of the product using Optical Character Recognition (OCR) or the European Article Numbering (EAN) which is then provided to counterpart modules 432, 434 that access the object identity process system 440. A Bluetooth transceiver module in the mobile phone 430 may also communicate with a Bluetooth transceiver module 436 to access the object identity process system 440. In addition, a user may access a local area network 474 to access the object identity process system 440 to provide data to the database or to request data therefrom. Accordingly, the terminal of the user may include a network interface 476 for connecting to the local area network 474.

Further, short messaging service (SMS) may be used to obtain information, for example experience information services, through a digital cellular radio system. A first short message 480 which contains the identification of the product type to be bought and the destination address is transferred from the user's terminal 430 via a cellular radio network 484 to a short messaging service center 486. The first short message 480 is routed from the short message service center 486 through a communication network 488 to the object identity process system 440 and then to the server 450.

Based on the data contained in the first short message 480 to the server 450, a service is carried out and a reply 490 representing the outcome of a service is transferred from the server 450 via communication network 488, the short message service center 486 and the cellular radio network 484 to the user's terminal 430.

A SMSC (as illustrated in Fig. 1) may be linked via an user interface server to the service provider server 450. Signaling is possible simultaneously with another service, since the short messages are transmitted as in an integrated services network, e.g., over the signaling channel of a cellular radio network, not the voice channel.

The object identity process system 440 processes the identity information provided by the user 410 and via the server 450 allows the user access to corresponding product information in the database 460. The product information may be technical data, user experienced data, etc. Further, as illustrated in Fig. 4, a user may be allowed to transmit appropriate information 470 to the database 460.

The registration of the server 450 can also be accomplished using SMS in a manner similar to the SMS process described above. To communicate user comments to the server 450, the short message 480 may include the identification of the user terminal, the identification of the product purchase and comments associated with the identified product. This information may be included in a single message or in multiple messages as required or directed by the server 450

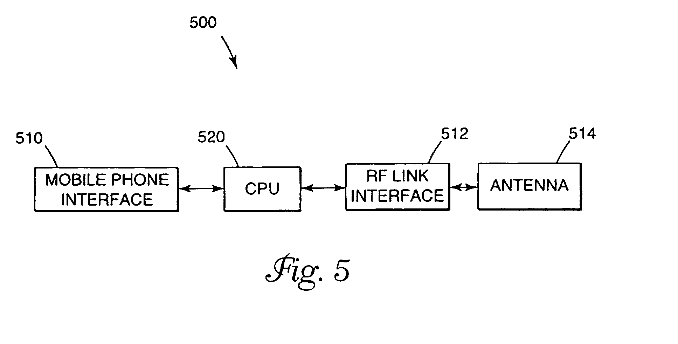

Fig. 5 illustrates a block diagram of a Bluetooth module 500 for use with a mobile phone according to the present invention as illustrated in Fig. 2. The Bluetooth module 500 includes an interface to the mobile phone 510 and an interface to the RF link 512. An antenna 514 is provided for transmitting and receiving low power RF signals. A CPU 520 is provided for processing signals between the mobile phone interface 510 and the RF link interface 512.

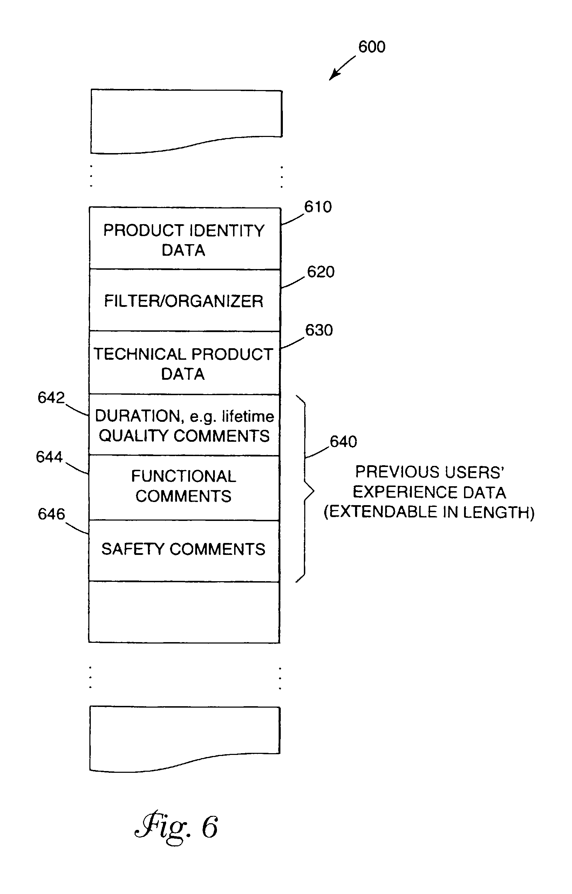

Figs. 6-7 illustrate fields and structure in a database for an embodiment wherein the product purchase embodiment is used as an example. However, those skilled in the art will recognize that the present invention is not meant to be limited to the structure and fields illustrated herein. Rather, the examples herein are provided to demonstrate one example for constructing a database, and the described structure and fields may be modified or implemented to suit the needs of the other embodiments representing the present invention.

Fig. 6 illustrates one example of the database structure 600. In Fig. 6, the database structure includes product identifying data 610, filter/address pointers and agents 620 (i.e., an organizer). The database 600 may be separated in different levels of information, such as technical product data 630 and previous users' experience data 640 including duration/quality comments 642, functional comments 644 and safety information 646. The previous user's experience data 640 is extendible in length to accommodate many user contributions. Memory may also be configured in other ways, e.g., nonlinear, random access, etc. Further, the memory may be implemented in semiconductor memory, hard drives, tape systems, optical storage systems, etc.

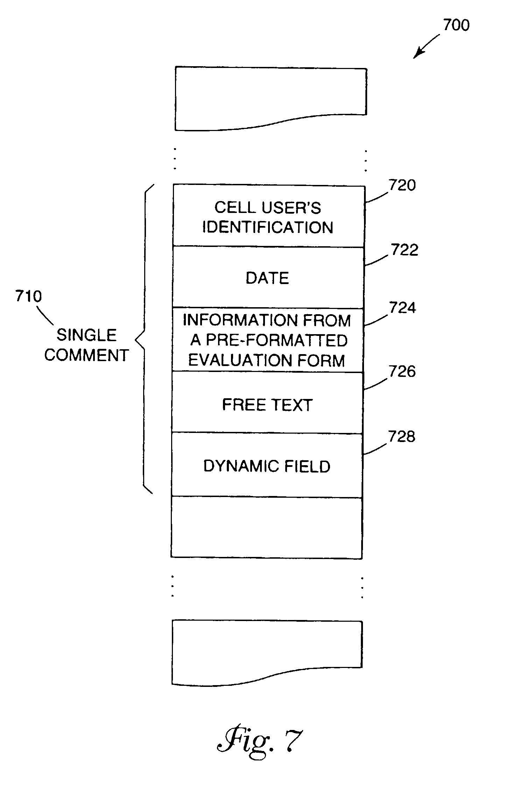

Fig. 7 illustrates one example of user contribution fields 700 according to the present invention. The comment records may contain fields, such as that illustrated for a single comment 710 in Fig. 7. The single comment 710 may include a cell users' identification 720, date 722 and other preformatted data 724. Free text fields 726, dynamic fields 728 such as grading of contributors trust (e.g., numbers between 0-5 to show the ranking of the product) and statistical data such as average rankings, etc. Additionally, the dynamic field 728 may contain information concerning the deviation of the particular product relative to other similar products.

As an example the database may provide a list of all products of particular class type, such as microwave ovens. Information pertaining to the microwave ovens in the database may be presented to the user in a usable format, e.g. microwave oven XLT 600 is ranked as a 2 and the average for microwave ovens of this type is a 4. Thus the user of the database does not need to look at all of the different devices, but may view only the information associated with the device of interest.

The database may include security features that limits access thereto. For example access to the product information including the experience data in the database may be checked by the mobile phone identification. In this manner only one mobile phone user can add information to the database, and then such addition to the database may be limited to a single data entry session. Further the device, which was purchased by a user, may include a code that provides access to the database once for creating a file entry. In this scenario the user may be allowed to access the database at later times to create, add or delete information.

The foregoing description of the exemplary embodiment of the invention has been presented for the purposes of illustration and description. It is not intended to be exhaustive or to limit the invention to the precise form disclosed. Many modifications and variations are possible in light of the above teaching. It is intended that the scope of the invention be limited not with this detailed description, but rather by the claims appended hereto.

## Claims

1. A method for retrieving product specific information in order to facilitate a user's decision making, comprising:
establishing a database comprising product specific information;
providing a product identity system into the database for allowing a user to locate information in the database associated with product identification data; and
accessing the database using the product identity system to obtain product information in the database associated with the product identification data.

2. The method of claim 1 wherein product information further comprises earlier users' experiences with at least one product.

3. The method of claim 1 wherein the accessing further comprises accessing the database of the product information to obtain earlier users' experiences with a product.

4. The method of claim 1 wherein the establishing a database further comprises sending product information from a terminal to the database.

5. The method of claim 1 wherein the establishing a database further comprises loading pre-existing product information to the database.

6. The method of claim 1 wherein the establishing further comprises using a mobile phone to identify a product of interest.

7. The method of claim 6 wherein the using a mobile phone further comprises positioning the mobile phone near a product identifier on the product of interest.

8. The method of claim 7 wherein the product identifier is a bar code, the mobile phone scanning the bar code to identify the product of interest.

9. The method of claim 7 wherein the positioning the mobile phone near a product identifier to identify a product of interest comprises using an infrared transceiver as an identity ascertainment module.

10. The method of claim 7 wherein the positioning the mobile phone near a product identifier to identify a product of interest comprises using Optical Character Recognition as an identity ascertainment module.

11. The method of claim 7 wherein the positioning the mobile phone near a product identifier to identify a product of interest comprises using European Article Numbering as an identity ascertainment module.

12. The method of claim 7 wherein the positioning the mobile phone near a product identifier to identify a product of interest comprises using a low-power radio frequency transceiver module, such as a Bluetooth transceiver module, as an identity ascertainment module.

13. The method of claim 7 wherein the positioning the mobile phone near a product identifier to identify a product of interest comprises using a short messaging service module as an identity ascertainment module.

14. The method of claim 1 wherein the establishing further comprises using a mobile phone having a short messaging capability to send a short message to the database to identify a product of interest.

15. The method of claim 6 wherein the using a mobile phone to identify a product of interest further comprises identifying a plurality of products of interest.

16. The method of claim 1 wherein the accessing the database to obtain product information associated with a product of interest further comprises connecting the mobile phone to a communications network; accessing and routing the identifying information to the database, and retrieving product information associated only with the identifying information routed to the database.

17. The method of claim 1 wherein the accessing the database further comprises using sending a short message containing product identification data to the product identity system.

18. The method of claim 1 wherein the accessing the database further comprises accessing a local area network containing product identification data to the product identity system.

19. The method of claim 1 wherein the establishing the database comprising product information comprises purchasing of a plurality of products by earlier users sending experiences concerning product purchased earlier by the earlier users, constructing a database regarding the experiences of the earlier users and associating the experiences with an appropriate product identifier.

20. The method of claim 1 wherein the method comprises accessing the database using a mobile phone, and before the step of accessing the database the method comprises checking authorization to access the database by checking the mobile phone identification.

21. The method of claim 20 wherein the method comprises linking the product identification of a specific product with the identification of the mobile phone of the user purchasing the specific product in order to authorize said user to enter information into the database for the specific product based on the mobile phone identification.

22. A mobile phone, comprising:
a product identity ascertainment module for obtaining a product identifier from a product of interest by a user; and
a controller, coupled to the product identity ascertainment module, for processing the product identifier and providing call functions to route the product identifier to a server for obtaining earlier users' experiences regarding the product of interest.

23. The mobile phone of claim 22 further comprising:
a keypad for providing user input;
a speaker and microphone for providing audio data to a user;
a display for displaying information concerning the mobile phone to a user; and
a transceiver for providing a communication signal based upon input provided by the user.

24. The mobile phone of claim 22 wherein the product identity ascertainment module comprises a bar code scanner for scanning the product identifier, the product identifier comprising a bar code.

25. The mobile phone of claim 22 wherein the product identity ascertainment module comprises an infrared transceiver.

26. The mobile phone of claim 22 wherein the product identity ascertainment module comprises an Optical Character Recognition reader module.

27. The mobile phone of claim 22 wherein the product identity ascertainment module comprises an European Article Numbering reader module.

28. The mobile phone of claim 22 wherein the product identity ascertainment module comprises a low-power radio frequency transceiver module, such as a Bluetooth transceiver module.

29. The mobile phone of claim 22 wherein the product identity ascertainment module comprises a network interface for connecting to a local area network to access the server.

30. A consumer product review system, comprising:
a database comprising information on earlier users' behaviour and/or experiences with a plurality of products;
a mobile phone for identifying a product of interest and for generating a product service request; and
a server for receiving the product service request and for accessing the database to process the product service request.

31. The consumer product review system of claim 30 wherein the server processes the product service request by entering earlier users' behaviour and/or experiences with the product of interest into the database.

32. The consumer product review system of claim 30 wherein the server processes the product service request by providing the earlier users' behaviour and/or experiences with the product of interest, and sending the earlier users' behaviour and/or experience with the product of interest to the mobile phone.

33. The consumer product review system of claim 32 wherein the mobile phone comprises a product identity ascertainment module for obtaining a product identifier from a product of interest by a user.

34. The consumer product review system of claim 33 wherein the product identifier is a bar code, the product identity ascertainment module scanning the bar code to identify the product of interest.

35. The consumer product review system of claim 33 wherein the product identity ascertainment module is an infrared transceiver.

36. The consumer product review system of claim 33 wherein the product identity ascertainment module comprises an Optical Character Recognition reader module.

37. The consumer product review system of claim 33 wherein the product identity ascertainment module comprises an European Article Numbering reader module.

38. The consumer product review system of claim 33 wherein the product identity ascertainment module comprises a low-power radio frequency transceiver module, such as a Bluetooth transceiver module.

39. The consumer product review system of claim 33 wherein the product identity ascertainment module comprises a short messaging service module.

40. The consumer product review system of claim 33 wherein the product identity ascertainment module comprises a network interface for connecting to a local area network to access the server.
